# EUROPEAN PATENT APPLICATION

(11) **EP 3 964 346 A1**
(43) Date of publication of application: **09.03.2022**
(21) Application number: 21194287.5
(22) Date of filing: 01.09.2021
(51) Int. Cl.: B29C 45/14, B29C 45/00, B29K 75/00, B29K 105/20, B29L 31/00

(54) **RACK FOR DRYING PRODUCTS**

(30) Priority: 08.09.2020 IT 202000021181
(71) Applicant: Bru-Gi di Brunelli Giuseppe, 26015 Soresina (CR) (IT)
(72) Inventor: BRUNELLI, Giuseppe, 26011 Casalbuttano ed Uniti (CR) (IT)
(74) Representative: Ripamonti, Enrico

(57) **Abstract**

A method for producing a rack (10) for drying products comprising the following steps: cleaning the mould (20), distributing a release agent on the inner surfaces of the mould (20), inserting a mesh (13), blocking the mesh (13) at the front on a first side (25) of the mould (20), blocking the mesh (13) at the back on a second side (31) of the mould (20) opposite said first side (25), tensioning the mesh (13), inserting cross bars (14), closing the mould (20), injecting a moulding material into the mould (20), opening the mould (20), cutting the mesh (13), releasing the mesh (13) at the back on said second side (31), releasing the mesh (13) at the front on said first side (25), extracting the rack (10).

## Description

The present invention relates to a method for producing a rack for drying products, in particular for drying foods and even more in particular for drying pasta.

Drying procedures are very widely used in the food production and preservation industry. The production of dry pasta, in particular, includes a drying step that normally takes place by loading the pasta onto specific racks, which are then inserted into ovens or hot air drying chambers.

The aforesaid racks are made of wood, plastic, stainless steel or aluminium alloy, and consist essentially of an external frame that supports a mesh onto which the pasta is loaded.

More in detail, with reference to racks of the type currently known, these are composed of a plurality of elements, fixed to one another with screws, by interlocking or with other equivalent means, and the mesh is fixed along its perimeter edge, also with fixing means.

In most cases, smaller cross members are also provided, with the function of stiffening the rack and supporting the mesh, preventing it from becoming deformed under the weight of the product.

These racks have numerous drawbacks and disadvantages, which have not yet been completely solved.

Firstly, the fact that the frame is composed of a plurality of elements interlocked or fixed with screws makes the construction more complex and costly, and above all makes the rack more difficult to wash and sanitise.

In fact, a rack formed of several elements inevitably has interstices between contiguous elements, and at the fixing screws, which are very difficult to clean and can form a receptacle for residue, dirt and bacteria. It is clear that in the food sector it is extremely important to be able to wash equipment perfectly, and anything that prevents this is an important disadvantage.

The document EP1205265 describes a method for constructing a support rack made of polymer to which a mesh is applied after moulding.

The document GB1604987 and the document US4533588 describe a thin mesh incorporated in a plastic sheet.

The document DE3123405 describes the use of a release agent.

The document US2010300943 describes sieving panels having a perforated upper section.

The document US4265742 describes sieving elements made of polyurethane, with incorporated metal reinforcing elements.

The object of the present invention is to provide a rack for drying products that can be cleaned and sanitised perfectly.

Another object is to provide a rack without interstices in which dirt and/or bacteria can accumulate.

In accordance with the present invention, these objects and others still are achieved by a method for producing a rack for drying products comprising the following steps: opening a mould, cleaning the mould, distributing a release agent on the inner surfaces of the mould, inserting a mesh, blocking the mesh at the front on a first side of the mould, blocking the mesh at the back on a second side of the mould opposite said first side, tensioning the mesh, inserting cross bars, closing the mould, injecting a moulding material into the mould, opening the mould, cutting the mesh, releasing the mesh at the back on said second side, releasing the mesh at the front on said first side, extracting the rack.

These objects are also achieved by a rack for drying products comprising: a frame formed of two lateral bars joined by two cross members; a mesh retained by said two lateral bars and by said two cross members; where said rack is produced in a single piece.

Further features of the invention are described in the dependent claims.

The advantages of this solution with respect to solutions of the known art are various.

To prevent the drawbacks of the prior art, the rack in accordance with the present invention has been produced in one piece co-moulded with materials that do not promote the proliferation of bacteria, moulds, etc. Moreover, as this material is easily washable, it ensures that the rack is extremely clean.

Moulding has been studied to allow insertion of the mesh and provide a rack completely without cavities.

There is no assembly of any type and therefore no gluing, heat-sealing, screws or the like.

Preferably, polyurethane is used to produce the rack, as with this material it is possible to manage the thicknesses required and in this way create trays that can have the same geometries as trays currently in use.

The features and the advantages of the present invention will be apparent from the following detailed description of a practical embodiment thereof, illustrated by way of non-limiting example in the accompanying drawings, wherein:

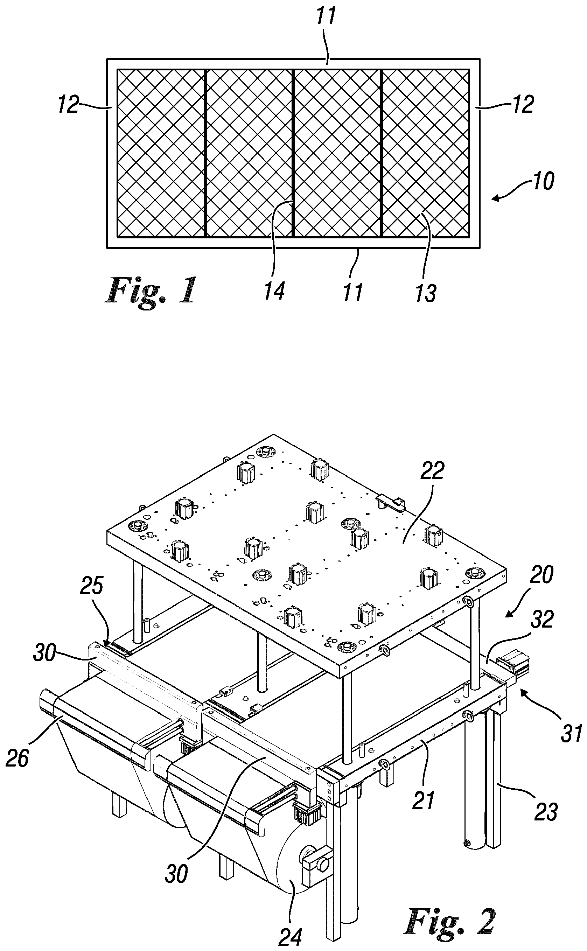

Fig. 1 schematically shows a rack for drying products in accordance with the present invention;
Fig. 2 schematically shows a mould for a rack for drying products in accordance with the present invention.

With reference to the accompanying figures, a rack 10 for drying products in accordance with the present invention comprises a frame formed of two lateral bars 11 joined by two cross members 12, and a mesh 13 embedded in the two lateral bars 11 and in the two cross members 12. The rack 10 further comprises two or more cross bars 14 for supporting the mesh 13 and/or for stiffening the rack 10.

A mould 20 comprises a lower portion of mould 21 and an upper portion of mould 22.

The lower portion of mould 21 is positioned on a supporting base 23.

The accompanying figures show two moulds 20 side by side, but a single mould 20 can also be used.

A roll 24 on which the mesh 13 is wound, which defines a front entrance 25 of the mould 20, is fixed to the supporting base 23.

The mesh 13 is unwound from the roll 24, passes around an alignment bar 26 and then passes over the lower portion of mould 21 and exits from the other side of the mould 20.

A front gripper 30, preferably the same width as the mould 20, which can block and retain the mesh 13 at the front, is positioned at the front entrance 25 of the mould 20, or in any case on a first side 25 of the mould 20.

The mesh 13 exits from a rear exit 31 of the mould 20, or in any case from a second side 31 of the mould 20, opposite the first side 25. A rear gripper 32, which can block and retain the mesh 13 at the back, is positioned at the rear exit 31 of the mould 20.

The grippers 30 and 32, or at least one of the two, besides having a vertical movement to be able to grip and retain the mesh 13, also has the possibility of a horizontal movement to provide a pre-tensioning of the mesh 13 to support any shrinkage and/or to maintain the mesh taut on the finished rack.

The material used to produce the structure of the rack 10 is polyurethane (PU), preferably food grade, with a density from 300 Kg/m³ to 1100 Kg/m³, preferably from 350 Kg/m³ to 650 Kg/m³, and more preferably around 450 kg/m³.

To produce the rack 10, in alternative to polyurethane it is possible to use other materials such as Polyvinyl Chloride (PVC), Polypropylene (PP), Polyamide (PA or nylon), Melamine Resins, Epoxy Resins and Vinyl Ester Resins.

According to the material used for the rack 10, it is preferable to insert stiffening structures made of metal (or of another material) into the rack, such as L-shaped angle brackets in the corners of the rack or bars inside the lateral bars 11 or in the cross members 12. These stiffening structures are inserted into the mould and therefore will be embedded in the rack.

The material of the mesh 13 is food grade polyester, preferably supplied on rolls, but it is also possible to use sheets of mesh cut to the size of the mould.

For the mesh 13, alternatively it is possible to use other materials, such as nylon, polypropylene, fabrics, nonwovens (TNT), stainless steel.

The cross bars 14 are plastic or metal elements that are inserted into the mould and remain embedded in the rack 10.

The moulding process is implemented with the following steps.
- opening the mould 20,
- cleaning the mould 20,
- distributing a release agent on the inner surfaces of the mould 20, i.e., distributing a material that facilitates extraction of the rack 10 from the mould 20 at the end of moulding,
- inserting the mesh 13 (from the roll 24 or a mesh cut to size),
- blocking the mesh 13 at the front on the first side 25 by means of the front grippers 30,
- blocking the mesh 13 at the back on the second side 31 by means of the rear grippers 32,
- tensioning the mesh 13, horizontally operating at least one gripper of the front grippers 30 or of the rear grippers 32,
- inserting cross bars 14,
- closing the mould 20,
- injecting the material (polyurethane or other) into the mould 20,
- opening the mould 20 at the end of moulding,
- cutting the mesh 13 at the back, if it comes from and is connected to a roll 24 of mesh 13,
- releasing the mesh 13 at the back, opening the rear grippers 32,
- releasing the mesh 13 at the front, opening the front grippers 30,
- extracting the rack 10.

The steps are characterised by arranging the mesh before closing the rack. That is, the mesh is placed in the appropriate position of the mould, so that it is at the desired height, it is blocked by means of the grippers 30 and 32. It is then pulled by moving one of the grippers 30 or 32 horizontally.

If necessary, the stiffening tubes of the cross members and, again if necessary further stiffening means, are inserted, the mould is closed and the material is injected.

To avoid any leakages of material during moulding, if the mesh is not sufficiently soft, a gasket, preferably soft and more preferably made of silicone, can be inserted.

After opening the mould, if the mesh comes directly from a roll it is cut, otherwise it is cut before insertion into the mould, the grippers are released and the rack is extracted.

The rack is thus produced with a single material that acts as a shell for any stiffening means inserted and also the mesh is embedded in the rack itself.

The mould has been produced with attention to the design to obtain a rack that has no crevices, steps, nooks and crannies and the like in which dirt and/or bacteria can accumulate. The material can be easily washed and sanitised.

The rack thus produced is susceptible to numerous modifications and variants, all falling within the scope of the inventive concept; moreover, all details can be replaced by technically equivalent elements.

## Claims

1. A method for producing a rack (10) for drying products comprising the following steps:
• opening a mould (20),
• cleaning the mould (20),
• distributing a release agent on the inner surfaces of the mould (20),
• inserting a mesh (13),
• blocking the mesh (13) at the front on a first side (25) of the mould (20),
• blocking the mesh (13) at the back on a second side (31) of the mould (20) opposite said first side (25),
• tensioning the mesh (13),
• inserting cross bars (14),
• closing the mould (20),
• injecting a moulding material into the mould (20),
• opening the mould (20),
• cutting the mesh (13),
• releasing the mesh (13) at the back on said second side (31),
• releasing the mesh (13) at the front on said first side (25),
• extracting the rack (10).

2. The method in accordance with claim 1, **characterised in that** said rack comprises: a frame formed of two lateral bars (11) joined by two cross members (12); a mesh (13) retained by said two lateral bars (11) and by said two cross members (12).

3. The method in accordance with claim 2, **characterised in that** said rack further comprises two or more cross bars (14) for supporting the mesh (13) and/or stiffening the rack (10).

4. The method in accordance with claim 2, **characterised in that** said rack also comprises stiffening structures.

5. The method in accordance with claim 1, **characterised in that** to carry out said step of blocking the mesh at the front, said mould uses a front gripper (30).

6. The method in accordance with claim 1, **characterised in that** to carry out said step of blocking the mesh at the back said mould uses a rear gripper (32).

7. The method in accordance with claim 1, **characterised in that** to carry out said step of tensioning the mesh, said method comprises the step of operating at least one gripper horizontally.

8. The method in accordance with claim 1, **characterised in that** said rack is made of polyurethane.

9. The method in accordance with claim 1, **characterised in that** said mesh is made of polyester.

10. A rack for drying products comprising: a frame formed of two lateral bars (11) joined by two cross members (12); a mesh (13) retained by said two lateral bars (11) and by said two cross members (12); where said rack is produced in a single piece.
